# EUROPEAN PATENT SPECIFICATION

(11) **EP 3 418 849 B1**
(45) Date of publication and mention of the grant of the patent: **15.01.2020**
(21) Application number: 17177307.0
(22) Date of filing: 22.06.2017
(51) Int. Cl.: G05D 23/19, F24D 19/10

(54) **HEAT EXCHANGER THERMOSTAT ARRANGEMENT AND METHOD FOR CONTROLLING A HEAT EXCHANGER VALVE**
WÄRMETAUSCHERTHERMOSTATANORDNUNG UND VERFAHREN ZUR STEUERUNG EINES WÄRMETAUSCHERVENTILS
ENSEMBLE DE THERMOSTAT D'ÉCHANGEUR DE CHALEUR ET PROCÉDÉ DE COMMANDE D'UNE VANNE D'ÉCHANGEUR DE CHALEUR

(43) Date of publication of application: 26.12.2018
(73) Proprietor: Danfoss A/S, 6430 Nordborg (DK)
(72) Inventor: GAMMELJORD, Peter, 6430 Nordborg (DK); JENSEN, Jes Vestervang, 6430 Nordborg (DK)

(56) References cited:
- WO-A1-2007/046792
- WO-A2-2007/090405
- WO-A2-2009/024746
- DE-A1-102015 107 237

## Description

The present invention relates to a heat exchanger thermostat arrangement according to the preamble of claim 1.

Furthermore, the invention relates to a method for controlling a heat exchanger valve according to the preamble of claim 9.

Such a heat exchanger thermostat arrangement and a method for controlling a heat exchanger valve are known, for example, from WO 2009/024746 A2.

In the following a radiator and a radiator valve are used for describing an embodiment of the invention. However, the invention can be used with other heat exchangers as well, for example a floor heating.

A heat exchanger thermostat arrangement is generally used to adjust a room temperature. The actual room temperature should be as close as possible to a set-value of the room temperature. When the actual room temperature is lower than the set-value the valve is opened to allow a larger flow of heat carrying fluid through the heat exchanger. This will increase the room temperature. When the actual room temperature has reached the set-value the opening degree of the valve is decreased and the temperature decreases as well. Such a temperature control can lead, for example, to an over-shoot of the room temperature or to an ondulation of the room temperature.

WO 2007/090405 A2 describes control of a system with a large thermal capacity. The large thermal capacity is due to the fact that a floor heating system is built into a concrete layer. The control uses a two-step approach to reach the desired room temperature. In a first step the temperature of the concrete is controlled and in a second step the air temperature in the room is controlled.

The object underlying the invention is to have a good control of the room temperature.

This object is solved with a heat exchanger thermostat arrangement as defined in claim 1.

The heat sensor is different from the room temperature sensor and allows an indication of the heat supplied to the heat exchanger. This information can be used to make a forecast of the room temperature. The forecast room temperature is a "view in the future", i.e. an estimation of the room temperature which would develop when the actual conditions of the valve would remain unchanged. In this way a regulation can be much faster.

The temperature forecast generator comprises a heat development observation section in which a difference between an actual heat related value and at least one previously obtained heat related value is obtained. In this way the temperature forecast generator can take into account a function of supplied heat over time which in turn allows a temperature forecast.

In an embodiment of the invention the temperature forecast generator receives a room temperature related value from the room temperature sensor. The actual room temperature can be used in addition to generate the temperature forecast.

In an embodiment of the invention the heat development observation section is connected to a gain section. In the gain section an output of the heat development observation section can be amplified by multiplying it with a gain factor or by a gain be added.

In an embodiment of the invention the heat development observation section is connected to an adder adding an actual room temperature value and a value from the heat development observation section. This is a simple way to use the actual room temperature value as well.

In an embodiment of the invention the heat sensor is a valve temperature sensor. The valve temperature sensor is a sensor sensing the temperature of the valve itself. It is arranged close to a connection between the valve and the heat exchanger. In this way, it is possible to estimate the future room temperature based on a gradient from the valve temperature sensor.

In an embodiment of the invention which can be used alternatively or additionally the heat sensor is a heat exchanger temperature sensor. The heat exchanger temperature sensor senses the temperature of the heat exchanger, in particular the temperature near an inlet of the heat exchanger.

In both cases the heat sensor can be a remote sensor sensing the heat of the valve or of the heat exchanger from a remote position. For this purpose, for example, an IR-sensor can be used.

In an alternative embodiment the heat sensor is a flow sensor. The flow sensor measures the flow of the heat carrying fluid flowing through the heat exchanger. This information can as well be used to determine or estimate the amount of heat.

The object is solved in a method as defined in claim 9.

As described above in connection with the heat exchanger thermostat arrangement, the temperature forecast value is an estimation of a temperature which would develop if the actual conditions of the valve would remain unchanged. This estimation can be used to "correct" the opening degree of the valve at an earlier stage so that an over-shoot of the temperature can be avoided and other disturbances can be eliminated before they can affect the room temperature.

The temperature forecast value is related to a difference between an actual heat related value and a previously obtained heat related value. The method takes into account the heat development.

In an embodiment the temperature value is additionally based on an actual room temperature. In this case, for example, the temperature forecast value is only a difference between the actual room temperature and an estimated room temperature.

An embodiment of the invention will now be described in more detail with reference to the drawing, wherein:
- Fig. 1: shows a perspective view of a cross section through a heat exchanger thermostat arrangement according to an embodiment of the invention,
- Fig. 2: shows a schematic diagram of the way to obtain a room temperature forecast, and
- Fig. 3: shows some functions of temperature over time.

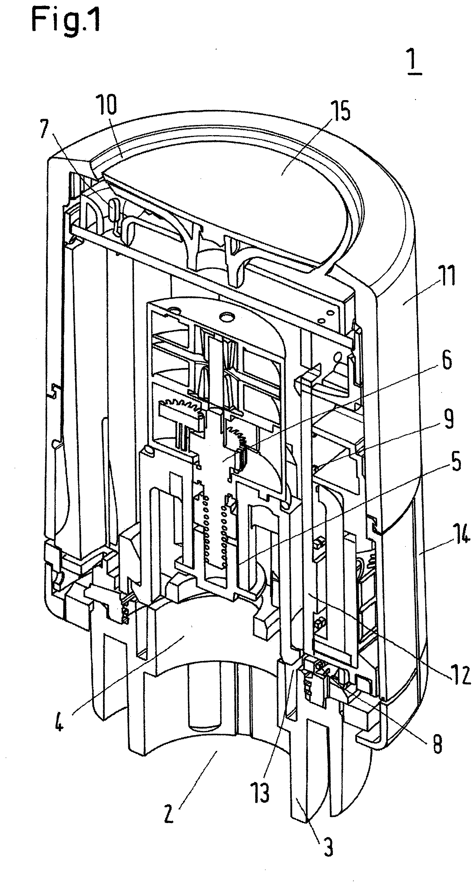

Fig.1 shows a heat exchanger thermostat arrangement 1 for a valve of a heat exchanger (valve and heat exchanger are not shown for purpose of clarity). The thermostat arrangement 1 comprises a valve coupling zone 2. The valve coupling zone 2 is defined as a socket adapted to couple the thermostat arrangement 1 to the valve. The valve coupling zone 2 comprises an inner wall 3 which forms a cavity 4. The cavity 4 is adapted to house a valve housing (not shown) of the valve. An actuator 5 driven by a gear work 6 is adapted to actuate a valve element in the valve housing and to adjust the opening degree of the valve.

The thermostat arrangement 1 comprises furthermore a first temperature sensor 7 having a first distance with respect to the valve coupling zone 2 and a second temperature sensor 8 having a second distance with respect to the valve coupling zone 2, the second distance being different from the first distance. In this embodiment, the first distance is larger than the second distance. Therefore, the first temperature sensor can be considered as room temperature sensor 7 and the second temperature sensor can be considered as a valve temperature sensor 8.

A third temperature sensor 9 may be used having a third distance with respect to the valve coupling zone 2, the third distance being different from the first distance and from the second distance.

The room temperature sensor 7 is arranged in an opening 10 of the thermostat arrangement 1, and offset from a rotational axis of a handle 11 of the thermostat arrangement 1. Therefore, the room temperature sensor 7 will mainly measure an ambient air temperature or room temperature. As the valve temperature sensor 8 is arranged at the socket 4 near the valve coupling zone 2 it will mainly measure the valve temperature or a temperature of a heat carrying fluid which is controlled by the valve.

The third temperature sensor 9 can be arranged equidistant from the room temperature sensor 7 and the valve temperature sensor 8. To allow an easy fixing of the third temperature sensor 9 to the thermostat arrangement 1, a support element 12 is provided next to a side wall of the thermostat arrangement 1 radially surrounding the rotational axis of the handle 11. The support element 12 can be in form of a PCB (Printed Circuit Board). The support element 12 is also a PCB of a display 14 of the thermostat arrangement 1 and carries a controller.

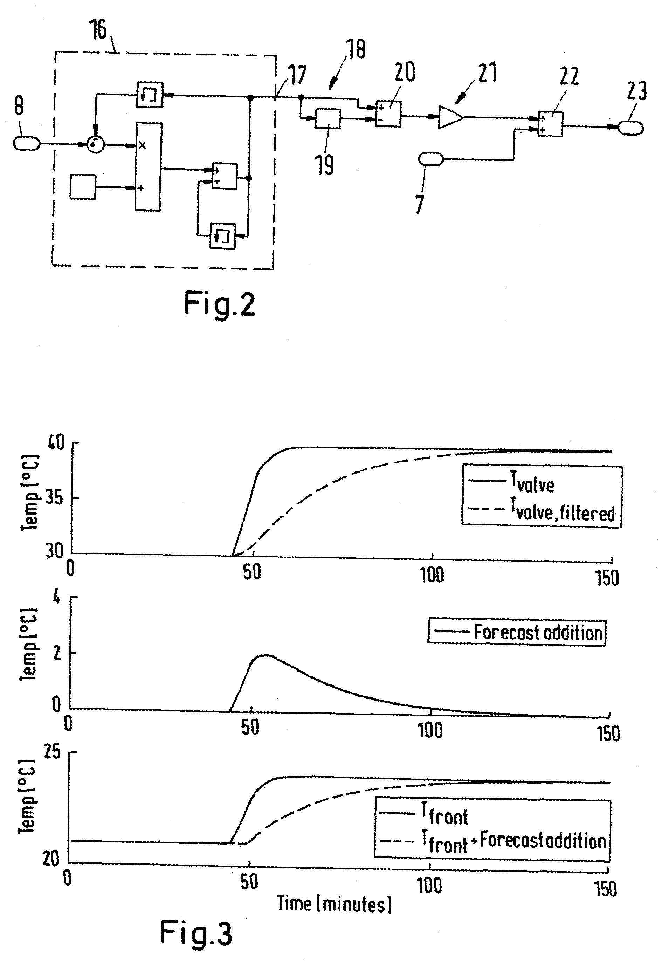

The controller comprises a temperature forecast generator as will be described below in connection with Fig. 2 and 3.

A gap 13 for air convection and heat radiation is provided in the thermostat arrangement 1.

The room temperature sensor 7 in the opening 10 is covered by a plastic shield 15. This helps in shielding the room temperature sensor 7 from mechanical influence and heater radiation or sunlight heat.

Fig. 2 schematically shows elements which are used to obtain a room temperature forecast.

The valve temperature sensor 8 is connected to a filter 16. The filter 16 comprises an output 17 at which an actual heat related value is provided. This output 17 is connected to a heat development observation section 18. The heat development observation section 18 comprises a unit delay 19. The unit delay 19 stores at least the previously obtained heat related value from the output 17 of the filter 16. The heat development observation section 18 is connected to a unit 20 forming a difference between the actual heat related value from the output 17 of the filter 16 and the previously obtained heat related value from the unit delay 19. The difference is supplied to a gain section 21 in which a gain is added. Another possibility would be that the gain section 21 multiplies the output of the unit 20 with a constant factor. The output of the gain section 21 is a forecast temperature which is supplied to an adder 22. The adder 22 receives the actual room temperature from the room temperature sensor 7. The addition of the forecast temperature and the actual room cast temperature leads to a room forecast temperature 23.

Fig. 3 shows three diagrams each showing one or two temperatures over time.

The first diagram on top shows the valve temperature Tᵥₐₗᵥₑ obtained by the valve temperature sensor 8 in a full line. The filtered temperature T_{valve,} filtered is shown in a dashed line.

A middle diagram shows the forecast temperature and the lower diagram shows a room temperature T_{front} in a full line and the room temperature forecast Tfront + forecast addition in a dashed line.

In principle, the data or value from the temperature sensor closest to the valve, i.e. from the valve temperature sensor 8 is used to make a forecast for the room temperature. This is in principle done in the way that the room temperature estimate is corrected with a gradient from the valve temperature sensor 8.

The flow of heat carrying fluid through the valve or generally through the heat exchanger is, for example, dependent on the differential pressure over the valve. When the valve is open there might be a variation in the flow and therefore it is difficult to exactly determine how much water or other heat carrying fluid is flowing through the valve. This can again lead to, for example, over-shoot of the room temperature because too much heat carrying fluid has passed through the valve.

When a temperature forecast is made, which is based on a measurement of the heat supplied to the heat exchanger, the regulation is "told" much sooner if the flow is changed so that over- or undershoot can be reduced. This also compensates for changes in the forward water temperature so that disturbances can be eliminated before they can affect the room temperature.

The temperature of the valve can also be replaced by the temperature of the heat exchanger. The temperature of the valve and/or the temperature of the heat exchanger can also be detected remotely, for example by IR-sensor which "looks" at the infrared radiation from the heat exchanger.

It is therefore not necessary that heat sensor is part of the controller. It could also be built with discrete electronics.

The information about the heat supplied to the heat exchanger can also be obtained by means of a flow sensor. When looking at the changes in the flow this would lead to a measure for how much heat is supplied to the heat exchanger.

A calculation of the room temperature forecast can, for example, be made once every minute and in this example the gain of the gain section 21 could be 6 so that there is a curve looking at "6 minutes". If there is, for example, an actual valve temperature of 45 degree (or a corresponding value) and the last valve temperature measurement was 44 degrees, then there is a difference of 1 degree outputted at the unit 20. With a gain of 6 there are 7 degrees as the forecast and if the temperature measured by the room temperature sensor 7 is 22 degree, then the forecast room temperature is 29 degrees until the next measurement. Based on these 29 degrees the actuator 9 can change the opening degree of the valve.

## Claims

1. Heat exchanger thermostat arrangement (1) comprising a valve, a room temperature sensor (7), a controller, and a heat sensor (8), wherein the controller comprises a temperature forecast generator making a temperature forecast based on a heat related value received from the heat sensor (8), **characterized in that** the temperature forecast generator comprises a heat development observation section (18) in which a difference between an actual heat related value and at least one previously obtained heat related value is obtained.

2. Heat exchanger thermostat arrangement according to claim 1, **characterized in that** the temperature forecast generator receives an actual room temperature related value from the room temperature sensor (7).

3. Heat exchanger thermostat arrangement according to claim 1 or 2, **characterized in that** the heat development observation section (18) is connected to a gain section (21).

4. Heat exchanger thermostat arrangement according to any of claims 1 to 3, **characterized in that** the heat development observation section (18) is connected to an adder (22) adding an actual room temperature value and a value from the heat development observation section (18).

5. Heat exchanger thermostat arrangement according to any of claims 1 to 4, **characterized in that** the heat sensor is a valve temperature sensor (8).

6. Heat exchanger thermostat arrangement according to any of claims 1 to 4, **characterized in that** the heat sensor is a heat exchanger temperature sensor.

7. Heat exchanger thermostat arrangement according to claim 5 or 6, **characterized in that** the heat sensor is a remote sensor.

8. Heat exchanger thermostat arrangement according to any of claims 1 to 4, **characterized in that** the heat sensor is a flow sensor.

9. Method for controlling a heat exchanger valve in which an opening degree of the valve is adjusted based on a temperature value, wherein the temperature value comprises a temperature forecast value which is based on a heat related value obtained from a heat sensor, **characterized in that** the temperature forecast value is related to a difference between an actual heat related value and a previously obtained heat related value.

10. Method according to claim 10, **characterized in that** the temperature value is additionally based on an actual room temperature.

## Patentansprüche

1. Wärmetauscherthermostatanordnung (1), umfassend ein Ventil, einen Raumtemperatursensor (7), eine Steuereinheit und einen Wärmesensor (8), wobei die Steuereinheit einen Temperaturvorhersagegenerator umfasst, der auf der Grundlage eines vom Wärmesensor (8) empfangenen wärmebezogenen Werts eine Temperaturvorhersage trifft, **dadurch gekennzeichnet, dass** der Temperaturvorhersagegenerator einen Wärmeentwicklungs-Beobachtungsabschnitt (18) umfasst, in dem eine Differenz zwischen einem wärmebezogenen Istwert und mindestens einem zuvor erhaltenen wärmebezogenen Wert erhalten wird.

2. Wärmetauscherthermostatanordnung nach Anspruch 1, **dadurch gekennzeichnet, dass** der Temperaturvorhersagegenerator vom Raumtemperatursensor (7) einen raumtemperaturbezogenen Istwert empfängt.

3. Wärmetauscherthermostatanordnung nach Anspruch 1 oder 2, **dadurch gekennzeichnet, dass** der Wärmeentwicklungs-Beobachtungsabschnitt (18) mit einem Verstärkungsabschnitt (21) verbunden ist.

4. Wärmetauscherthermostatanordnung nach einem der Ansprüche 1 bis 3, **dadurch gekennzeichnet, dass** der Wärmeentwicklungs-Beobachtungsabschnitt (18) mit einem Addierer (22) verbunden ist, der einen Istwert der Raumtemperatur und einen Wert aus dem Wärmeentwicklungs-Beobachtungsabschnitt (18) addiert.

5. Wärmetauscherthermostatanordnung nach einem der Ansprüche 1 bis 4, **dadurch gekennzeichnet, dass** der Wärmesensor ein Ventiltemperatursensor (8) ist.

6. Wärmetauscherthermostatanordnung nach einem der Ansprüche 1 bis 4, **dadurch gekennzeichnet, dass** der Wärmesensor ein Wärmetauschertemperatursensor ist.

7. Wärmetauscherthermostatanordnung nach Anspruch 5 oder 6, **dadurch gekennzeichnet, dass** der Wärmesensor ein entfernt angeordneter Sensor ist.

8. Wärmetauscherthermostatanordnung nach einem der Ansprüche 1 bis 4, **dadurch gekennzeichnet, dass** der Wärmesensor ein Durchflusssensor ist.

9. Verfahren zum Steuern eines Wärmetauscherventils, bei dem ein Öffnungsgrad des Ventils auf der Grundlage eines Temperaturwerts angepasst wird, wobei der Temperaturwert einen Temperaturvorhersagewert umfasst, der auf einem von einem Wärmesensor erhaltenen wärmebezogenen Wert beruht, **dadurch gekennzeichnet, dass** der Temperaturvorhersagewert im Zusammenhang mit einer Differenz zwischen einem wärmebezogenen Istwert und einem zuvor erhaltenen wärmebezogenen Wert steht.

10. Verfahren nach Anspruch 10, **dadurch gekennzeichnet, dass** der Temperaturwert zusätzlich auf einer tatsächlichen Raumtemperatur beruht.

## Revendications

1. Agencement de thermostat d'échangeur de chaleur (1) comprenant une vanne, un capteur de température ambiante (7), un dispositif de commande et un capteur de chaleur (8), le dispositif de commande comprenant un générateur de prévision de température effectuant une prévision de température sur la base d'une valeur liée à la chaleur reçue du capteur de chaleur (8), **caractérisé en ce que** le générateur de prévision de température comprend une section d'observation de développement thermique (18) dans laquelle une différence entre une valeur liée à la chaleur réelle et au moins une valeur liée à la chaleur préalablement obtenue est obtenue.

2. Agencement de thermostat d'échangeur de chaleur selon la revendication 1, **caractérisé en ce que** le générateur de prévision de température reçoit une valeur liée à la température ambiante réelle du capteur de température ambiante (7).

3. Agencement de thermostat d'échangeur de chaleur selon la revendication 1 ou 2, **caractérisé en ce que** la section d'observation de développement thermique (18) est reliée à une section de gain (21).

4. Agencement de thermostat d'échangeur de chaleur selon l'une quelconque des revendications 1 à 3, **caractérisé en ce que** la section d'observation de développement thermique (18) est reliée à un additionneur (22) ajoutant une valeur de température ambiante réelle et une valeur provenant de la section d'observation de développement thermique (18).

5. Agencement de thermostat d'échangeur de chaleur selon l'une quelconque des revendications 1 à 4, **caractérisé en ce que** le capteur de chaleur est un capteur de température de vanne (8).

6. Agencement de thermostat d'échangeur de chaleur selon l'une quelconque des revendications 1 à 4, **caractérisé en ce que** le capteur de chaleur est un capteur de température d'échangeur de chaleur.

7. Agencement de thermostat d'échangeur de chaleur selon la revendication 5 ou 6, **caractérisé en ce que** le capteur de chaleur est un capteur à distance.

8. Agencement de thermostat d'échangeur de chaleur selon l'une quelconque des revendications 1 à 4, **caractérisé en ce que** le capteur de chaleur est un capteur d'écoulement.

9. Procédé de commande d'une vanne d'échangeur de chaleur dans lequel un degré d'ouverture de la vanne est ajusté sur la base d'une valeur de température, la valeur de température comprenant une valeur de prévision de température qui est basée sur une valeur liée à la chaleur obtenue par un capteur de chaleur, **caractérisée en ce que** la valeur de prévision de température est liée à une différence entre une valeur liée à la chaleur réelle et une valeur liée à la chaleur précédemment acquise.

10. Procédé selon la revendication 10, **caractérisé en ce que** la valeur de température est en outre basée sur une température ambiante réelle.
